# EUROPÄISCHE PATENTSCHRIFT

(11) **EP 2 746 171 B1**
(45) Veröffentlichungstag und Bekanntmachung des Hinweises auf die Patenterteilung: **04.11.2015**
(21) Anmeldenummer: 14160640.0
(22) Anmeldetag: 15.02.2013
(51) Int. Cl.: B65B 35/40, B65B 35/44, B65G 47/08, B65B 5/06, B65G 17/32

(54) **Fächergruppe zum Transport von nicht frei stapelfähigen Verpackungen, insbesondere von Stickpacks**
Compartment group for the transport of packages that cannot be freely stacked, in particular stickpacks
Groupe de compartiments pour le transport d'emballages non librement empilables, notamment de stick-packs

(30) Priorität: 15.02.2012 DE 102012101221
(43) Veröffentlichungstag der Anmeldung: 25.06.2014
(62) Teilanmeldung aus: 13155338.0
(73) Patentinhaber: MediSeal GmbH, 33758 Schloss Holte (DE)
(72) Erfinder: Sassenberg, Dirk, 33415 Verl (DE); Pasuch, Michael, 32107 Bad Salzuflen (DE)
(74) Vertreter: Stork Bamberger

(56) Entgegenhaltungen:
- EP-A1- 1 216 937
- EP-A1- 2 055 637
- JP-U- S6 299 504

## Beschreibung

Die vorliegende Erfindung betrifft eine Fächergruppe zum Transport von nicht frei stapelfähigen Verpackungen, insbesondere von Stickpacks, von einem Ort zu einem anderen Ort, insbesondere von einer Verpackungsherstellungsvorrichtung zu einem Transportbehälter in einer Transportverpackstation, wobei die Fächergruppe mindestens zwei nebeneinander angeordnete Fächer aufweist, die durch Trennwände gebildet sind, die eine strukturierte Oberfläche aufweisen, wobei die Fächer in Transportrichtung jeweils eine Breite gleich oder im Wesentlichen gleich der Breite der Verpackungen in Transportrichtung aufweisen.

Eine nicht frei stapelfähige Verpackung im Sinne der Erfindung ist jede Art von Verpackung, die nicht ohne Hilfsmittel mit weiteren gleichen Verpackungen einen Stapel bilden kann. Derartige Verpackungen sind insbesondere verformbare Verpackungen, d.h. solche, die keine formstabile Oberfläche aufweisen. Eine derartige verformbare Verpackung kann sich an ihren Inhalt anpassen oder sich abhängig von der Form oder Lage des Inhalts verändern. Beispiele für derartige Verpackungen sind Stickpacks, Beutel wie z.B. Teebeutel, Säcke, Schläuche oder Netze. Als Füllgut kommen dabei insbesondere Flüssigkeiten, gelartige Produkte, Schüttgut wie Pellets, Granulate oder Pulver und Stückgüter wie Bonbons oder Kapseln in Frage. Nicht stapelfähige Verpackungen sind ferner solche, die aufgrund ihrer Form nicht frei stapelbar sind, wie z.B. Kugeln oder Kreiszylinder, wenn die Stapel durch Aufeinanderlegen an den Mantelflächen gebildet werden. Ohne Hilfsmittel verrutschen die einzelnen Verpackungen beim Stapelbilden und bleiben nicht in der gewünschten Übereinanderanordnung. Verformbare Verpackungen gehören in jedem Fall zu den nicht frei stapelbaren Verpackungen im Sinne der Erfindung, auch wenn in einigen Fällen ein Stapel aus wenigen Verpackungen gerade noch ohne Hilfsmittel stabil sein mag.

Solche nicht frei stapelfähigen Verpackungen werden im Produktionsprozess auch von einer Verpackungsherstellungsvorrichtung, die derartige Verpackungen produziert, zu einem Transportbehälter in einer Transportverpackstation transportiert, in dem mehrere dieser Verpackungen für den Transport oder zu sonstigen Zwecken wie zum Beispiel zu einer Verkaufseinheit oder in einer Umverpackung zusammengefasst werden, wobei die Verpackungen während des Transports von der Verpackungsherstellungsvorrichtung zu der Transportverpackstation verdichtet werden. Derartige Transportbehälter können beispielsweise Kartons, Kästen, Boxen oder Container sein.

Die Verpackungsherstellung umfasst im Sinne der Erfindung nicht nur die Herstellung der Verpackung sondern auch deren Befüllung mit dem zu verpackenden Gut.

Die Verpackungen können beispielsweise von einer Verpackungsherstellungsvorrichtung hergestellt werden, die mindestens zwei Fallkanäle aufweist, die gleichmäßig oder im Wesentlichen gleichmäßig voneinander durch einen Mittenabstand P beabstandet sind, wobei die Vorrichtung ein erstes Transportelement mit mindestens einer Fächergruppe zur Aufnahme der von der Verpackungsherstellungsvorrichtung abgegebenen Verpackungen und zum Transport der Verpackungen in Richtung einer Transportverpackstation; eine Übergabeeinheit zur Übergabe der Verpackungen aus der Verpackungsherstellungsvorrichtung an die mindestens eine Fächergruppe des ersten Transportelements und zur Stapelbildung in der Fächergruppe sowie ein zweites Transportelement mit mindestens einer Fächergruppe zum Transport der Verpackungen zu der Transportverpackstation umfasst, wobei die Fächer der Fächergruppen des ersten und des zweiten Transportelements jeweils eine Breite gleich oder im Wesentlichen gleich der Breite der Verpackungen aufweisen.

Eine Fächergruppe, die mindestens zwei nebeneinander angeordnete Fächer aufweist, die durch Trennwände quer zur Transportrichtung gebildet sind, wobei die Fächer keine Wände in Transportrichtung aufweisen und wobei die Breite der Fächer B_{F} gleich oder im Wesentlichen gleich der Breite der Verpackungen B_{V} ist, bei der die Trennwände eine strukturierte Oberfläche aufweisen, ist geeignet, funktional eigenständig ganz allgemein zum Transport nicht frei stapelfähiger Verpackungen, insbesondere von Stickpacks, von einem Ort zu einem anderen, zum Beispiel von einer Verpackungsherstellungsvorrichtung zu einer Transportverpackstation, verwendet zu werden.

Bei solchen Fächergruppen bestand das Problem, das sich die darin transportierten nicht frei stapelfähigen Verpackungen schon bei einer geringen Anzahl übereinanderliegender Verpackungen, also bereits bei geringer Stapelhöhe, leicht gegeneinander verschieben. Insbesondere beim Überschieben von einer Fächergruppe in eine andere ergeben sich daraus Schwierigkeiten. Diese Probleme und Schwierigkeiten werden mit der erfindungsgemäßen Fächergruppe beseitigt, da die in den Fächern der Fächergruppe abgelegten Verpackungen kraft- und/oder formschlüssig von den Seitenwänden der Fächer fixiert und somit an einem Verrutschen gehindert werden.

Fächergruppen nach dem Stand der Technik, wie sie zum Beispiel in der US 6,321,904 beschrieben sind, sind zwar für die formschlüssige Aufnahme des zu transportierenden Gutes ausgebildet, jedoch sind sie nicht für die Aufnahme von Verpackungsstapeln geeignet und ausgebildet. Bei den Fächergruppen der US 6,321,904 handelt es sich um solche, bei denen die Wand selbst eine Form aufweist, die einen Formschluss mit dem Verpackungsgut bildet; eine Strukturierung der Oberfläche ist nicht vorgesehen.

In gleicher Weise beschreibt die EP 1 216 937 eine Fächergruppe, die Wandungen aufweist, die eine vertikale Wellenstruktur aufweisen. Zweck dieser Wellenstruktur ist es, zu verhindern, dass Teile des zu transportierenden Gutes an den Wandungen haften bleiben. Dazu weisen die gewellten Wandungen insbesondere glatte und abgerundete Oberflächen auf, um jegliches Anhaften sicher auszuschließen.

In der EP 2 055 637 A1 wird ebenfalls eine Fächergruppe beschrieben, wobei die Fächer bildenden Wandungen eine glatte Oberfläche aufweisen. Diese Wandungen sind für die Aufnahme von Stickpacks ausgebildet und weisen eine begrenzte Wandstärke auf. Zudem sind die Wände mit einer glatten Oberflächenstruktur ausgebildet und eine Variation der Oberflächenbeschaffenheit der Wandungen ist nicht vorgesehen.

Im Gegensatz zum Stand der Technik ist bei der erfindungsgemäßen Fächergruppe nicht die Wand selbst einer speziellen Formgebung unterworfen, die Form der Wand ist vielmehr frei wählbar, wobei eine einfache senkrechte oder im Wesentlichen senkrechte Wand, insbesondere aus Kostengründen, bevorzugt ist. Vielmehr bedeutet strukturiert im Sinne der Erfindung, dass die Oberfläche unabhängig von der Wandform nicht glatt ist, sondern eine Struktur aufweist. Durch eine solche Struktur kann eine kraft- und/oder eine formschlüssige Verbindung mit der Verpackung bewirkt werden. Die Struktur kann reibungserhöhend sein, indem beispielsweise die Oberfläche aufgeraut ist, kleine Rillen aufweist oder mit einem leicht haftenden Material beschichtet ist. Ebenso kann die Oberfläche der Trennwände formschlüssige Aufnahmen aufweisen wie zum Beispiel Rinnen oder Furchen.

Dabei ist es besonders bevorzugt, dass die Strukturierung der strukturierten Oberfläche durch im Wesentlichen horizontal angeordnete Rillen, Rinnen oder Furchen ausgebildet ist. Beim Einstapeln der Verpackungen werden diese in die Fächer gedrückt, verformen sich leicht, federn zurück und bleiben grundsätzlich an der strukturierten Oberfläche der Trennwände hängen. Das führt dazu, dass die Verpackungen durch Reibung in den Fächern gehalten und durch Formschluss vertikal positioniert werden, so dass sie sich nicht verdrehen und/oder kippen können und horizontal ausgerichtet bleiben. Dadurch ist ein Verrutschen der Verpackungen praktisch ausgeschlossen. Außerdem unterstützt eine solche Ausbildung als im Wesentlichen horizontale Rillen, Rinnen oder Furchen den Prozess des Überschiebens der Verpackungen von einer Fächergruppe in eine andere, da die einzelnen Verpackungen in ihren Verpackungsstapeln entlang der Bewegungsbahn beim Überschieben geführt werden.

Eine erfindungsgemäße Fächergruppe kann unterschiedlich verwirklicht sein. Bevorzugte Ausführungsformen sind eine Kassette oder eine Produktzellenkette.

In einer bevorzugten Ausführungsform der Fächergruppe ist die Fächerbreite in Transportrichtung B_{F} kleiner als die Breite der Verpackung in Transportrichtung B_{V} der zu transportierenden Verpackungen, wobei B_{F} vorzugsweise maximal um 10 % kleiner ist als B_{V}.

Die Erfindung wird nachfolgend beispielhaft für eine Fächergruppe für Stickpacks beschrieben.

Die im Folgenden anhand der beigefügten Zeichnung beschrieben weiteren Merkmale oder Weiterbildungen der Erfindung stellen jeweils für sich betrachtet oder in Kombination miteinander bevorzugte Ausführungsformen der Erfindung dar.

Es zeigen
Fig. 1a und 1 b eine schematische Seitenansicht einer erfindungsgemäßen Fächergruppe eines Transportelements in einer Beladeposition unterhalb einer Verpackungsherstellungsvorrichtung, wobei Fig. 1a die Fächer gefüllt mit einer Verpackung, Fig. 1 b die Fächer gefüllt mit fünfzehn Verpackungen zeigt;
Fig. 2a ist eine perspektivische Ansicht einer erfindungsgemäßen Fächergruppe, in der die Trennwände eine strukturierte Oberfläche aufweisen, und Fig. 2b ist ein vergrößerter Ausschnitt der Fig. 2a

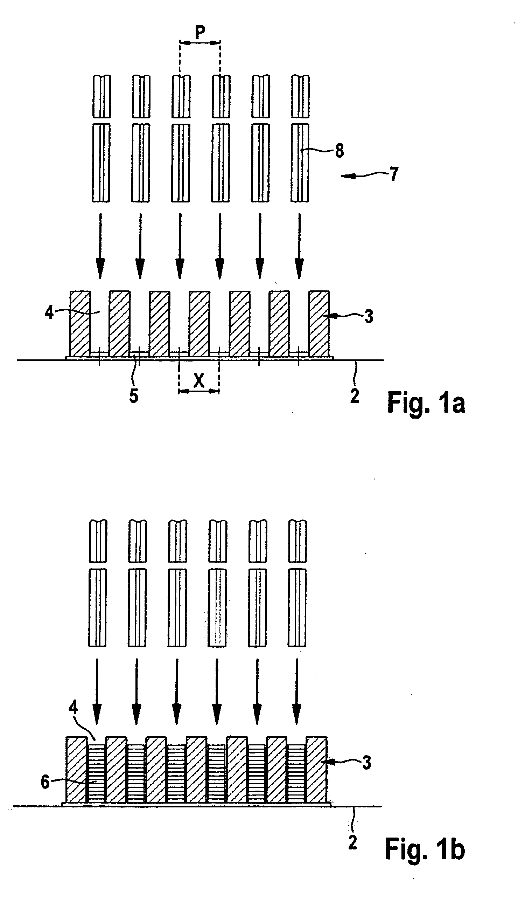

Fig. 1a zeigt schematisch Fallkanäle 8 einer Verpackungsherstellungsvorrichtung 7 zur Herstellung und Befüllung von Stickpacks, die im Folgenden als Stickpackmaschine bezeichnet wird. Die Stickpackmaschine arbeitet auf n Bahnen, die jeweils mit einem Mittenabstand P beabstandet sind. Entsprechend weisen auch die Fallkanäle 8 am Ende der Bahnen einen Abstand P auf, der ungefähr der doppelten Breite eines Stickpacks entspricht. In der gezeigten Ausführungsform ist die Anzahl der Bahnen und Fallkanäle F = 6, aber üblich sind insbesondere auch Werte von F = 2, 4, 8, 10, 12, 14 oder 16. Aus den Fallkanälen 8 fallen die fertig produzierten Stickpacks 5 heraus. Unter der Stickpackmaschine ist eine als Kassette ausgebildete Fächergruppe 3 eines Transportelements 2 derart angeordnet, dass die Fächer 4 der Kassette 3 jeweils genau unterhalb eine Fallkanals 8 angeordnet sind. Diese Position ist die Beladeposition der Kassette. Die Kassette 3 der gezeigten Ausführungsform weist f = 6 Fächer auf, entsprechend den sechs Fallkanälen der Stickpackmaschine. Die Stickpackmaschine arbeitet getaktet, in der Regel mit 60 Takten pro Minute. Es sind aber auch andere Taktzahlen zwischen 40 Takte pro Minute und 70 Takte pro Minute üblich. Die Stickpackmaschine legt in jedem Takt mit einer ersten Übergabeeinheit 9 in jedes der f Fächer 4 der Kassette 3 gleichzeitig einen der produzierten F Stickpacks ab. Die Kassette hat die Teilung X = P, d.h. die Teilung der Kassette ist gleich der Teilung der Stickpackmaschine 7. Die Stickpackmaschine stapelt Takt für Takt in die Kassette 3, bis die gewünschte Stapelhöhe erreicht ist. Der in der Fig. 1 b gezeigte Stapel 6 hat die Stapelhöhe 15. Die Stapelhöhe kann auch andere Werte gleich oder größer als 2 annehmen. Die Stapelhöhe ist durch die Höhe der Wände der Kassette 3 begrenzt.

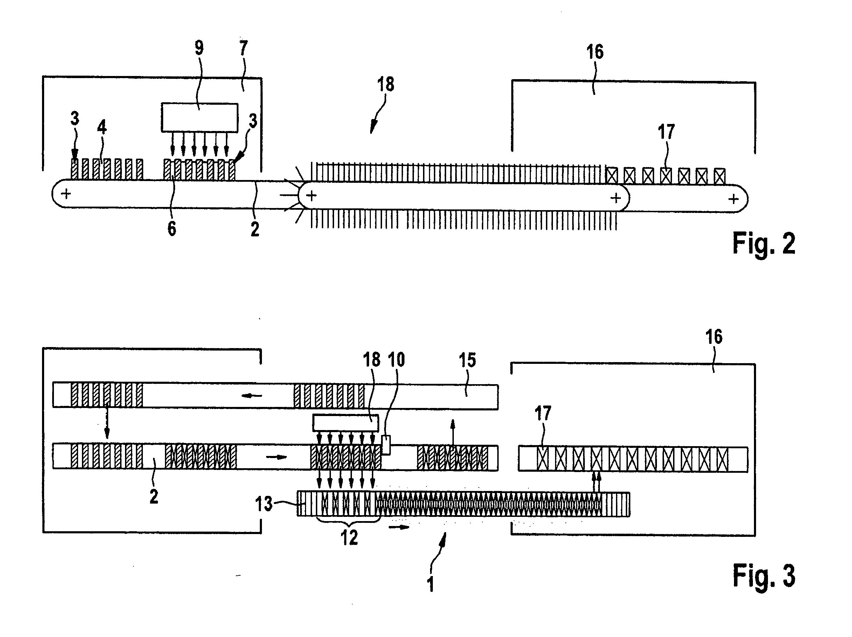

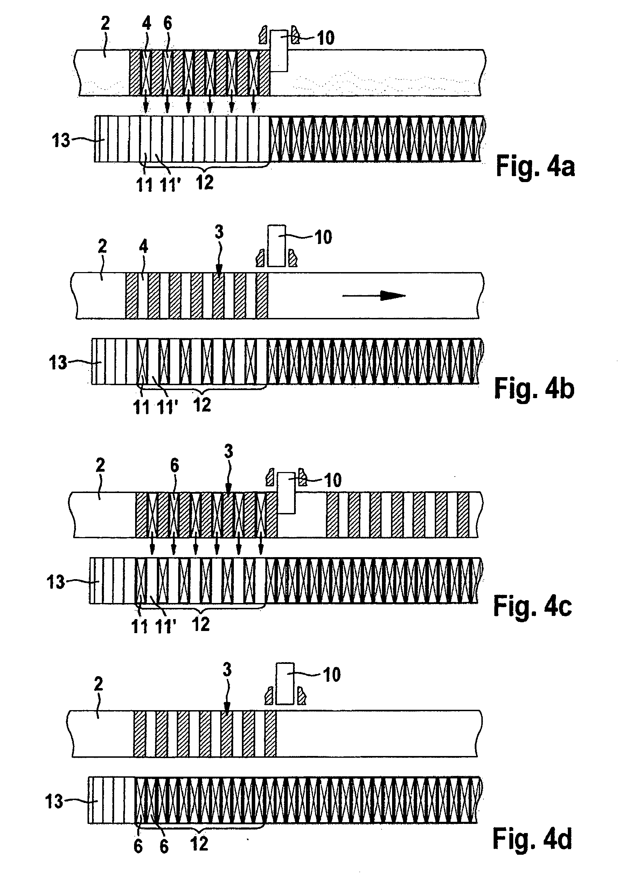

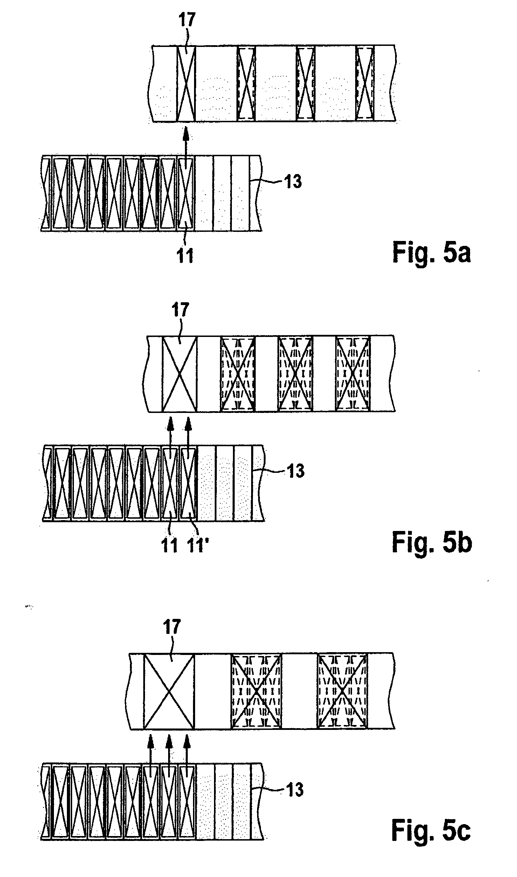

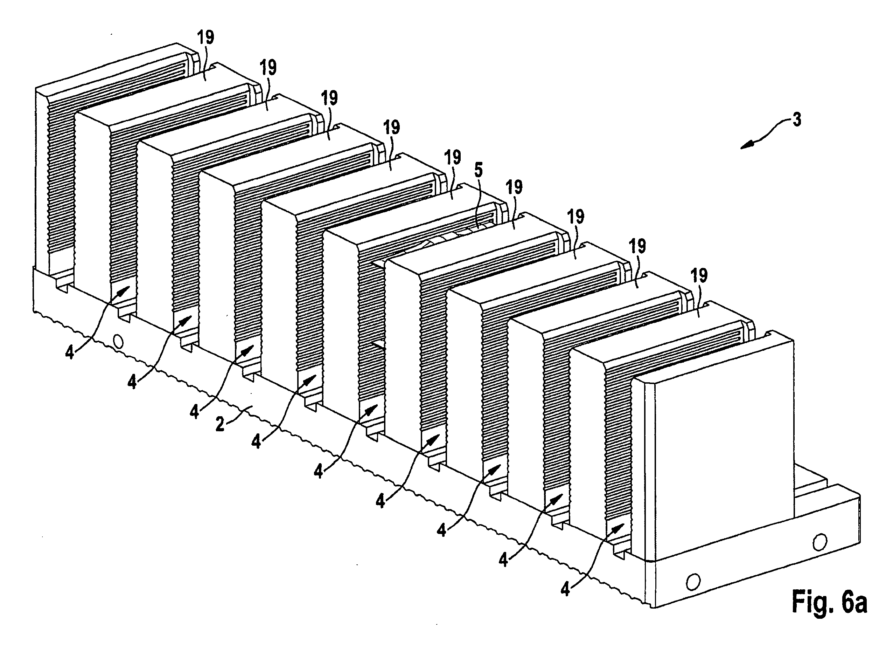

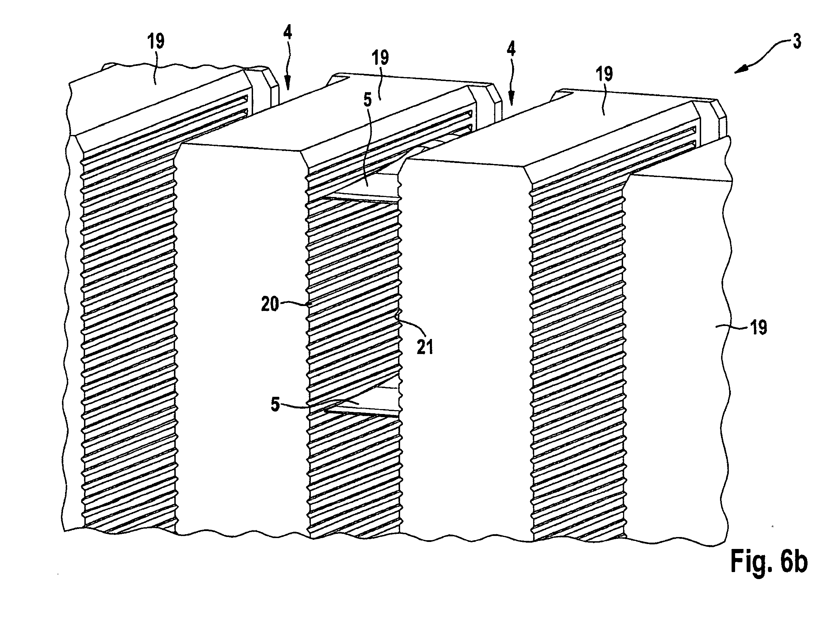

Fig. 2a und 2b zeigen eine Fächergruppe 3 zum Transport von Stickpackstapeln 6 aus Stickpacks 5. Die Fächergruppe 3 weist Trennwände 19 auf, die die Fächer 4, bezogen auf die Transportrichtung vorn und hinten begrenzen. An den Seiten weisen die Fächer 4 keine Wände auf. Die Trennwände 19 der Fächer 4 der Fächergruppe 3 weisen eine strukturierte Oberfläche auf, indem sie Rillen 20, 21 aufweisen. Beim Einstapeln der Stickpacks 5 unter einer Verpackungsherstellungsmaschine 7 werden die Stickpacks 5 in die Fächer 4 der Kassette 3 gedrückt. Die Stickpacks 5 verformen sich leicht, federn jedoch zurück, und sie bleiben grundsätzlich in den Rillen 20, 21 hängen. Dabei kommt es auch vor, dass sich die vordere und die hintere Stickpacknaht nicht in Rillen 20, 21 gleicher Höhe auf der jeweiligen Trennwand abstützen, sondern sich beispielsweise die hintere Naht in einer Rille 20 der einen Trennwand abstützt, die vordere Naht hingegen in einer um eins höher oder niedriger angeordneten Rille 21 auf der gegenüberliegenden Trennwand 19. Das führt dazu, dass der Stickpack 5 durch Reibung in der Kassette 3 gehalten wird und sich nicht verdrehen oder kippen kann. Der Stickpack wird zugleich vertikal positioniert und horizontal ausgerichtet.

## Patentansprüche

1. Fächergruppe (3) zum Transport nicht frei stapelfähiger Verpackungen, insbesondere von Stickpacks, von einem Ort zu einem anderen Ort, insbesondere von einer Verpackungsherstellungsvorrichtung (7) zu einer Transportverpackstation, wobei die Fächergruppe mindestens zwei nebeneinander angeordnete Fächer (4) aufweist, die durch Trennwände (19) gebildet sind, die eine strukturierte Oberfläche aufweisen, wobei die Fächer in Transportrichtung jeweils eine Breite gleich oder im Wesentlichen gleich der Breite der Verpackungen in Transportrichtung aufweisen, **dadurch gekennzeichnet, dass** die Strukturierung der strukturierten Oberfläche durch horizontal oder im Wesentlichen horizontal angeordnete Rillen, Rinnen oder Furchen ausgebildet ist.

2. Fächergruppe nach Anspruch 1, **dadurch gekennzeichnet, dass** die Fächerbreite in Transportrichtung B_{F} kleiner als die Breite der Verpackung in Transportrichtung B_{V} der zu transportierenden Verpackungen ist, wobei B_{F} vorzugsweise maximal 10% kleiner ist als B_{V}.

## Claims

1. Group of compartments (3) for the transport of non-freely stackable packagings, in particular of stick packs, from one location to another location, in particular by a packaging production apparatus (7) to a transport packaging station, wherein the group of compartments has at least two compartments (4) which are arranged next to one another and which are formed by separating walls (19) which have a structured surface, wherein the compartments in the transport direction have in each case a width equal to or substantially equal to the width of the packagings in the transport direction, **characterised in that** the structuring of the structured surface is formed by horizontally or substantially horizontally arranged grooves, channels or furrows.

2. Group of compartments according to claim 1, **characterised in that** the compartment width in transport direction B_{F} is smaller than the width of the packaging in transport direction B_{V} of the packagings to be transported, wherein B_{F} is preferably at most 10% smaller than B_{V}.

## Revendications

1. Groupe de cases (3) pour le transport d'emballages ne pouvant être empilés, notamment de stickpacks, d'un endroit vers un autre, notamment d'une station de fabrication d'emballages (7) vers une station d'emballage pour transport, le groupe de cases comprenant au moins deux cases (4) juxtaposées formées par des parois de séparation (19) qui présentent une surface structurée, les cases présentant chacune dans la direction de transport une largeur égale ou sensiblement égale à la largeur, dans la direction de transport, des emballages, **caractérisé en ce que** la structure de la surface structurée est formée par des sillons, des rainurages ou des ornières disposés horizontalement ou sensiblement horizontalement.

2. Groupe de cases selon la revendication 1, **caractérisé en ce que** la largeur des cases dans la direction de transport B_{F} est plus petite que la largeur de l'emballage dans la direction de transport B_{V} des emballages à transporter, B_{F} étant de préférence au maximum 10 % plus petite que B_{V}.
